# EUROPEAN PATENT APPLICATION

(11) **EP 4 847 983 A1**
(43) Date of publication of application: **02.12.2026**
(21) Application number: 25178692.7
(22) Date of filing: 26.05.2025
(51) Int. Cl.: G02B 21/00, G02B 21/36, G02B 21/16

(54) **METHOD AND SYSTEM FOR OBTAINING MICROSCOPY IMAGES CONTAINING 3D INFORMATION AND A COMPUTER PROGRAM PRODUCT**

(71) Applicant: Karlsruher Institut für Technologie, Körperschaft des öffentlichen Rechts, 76131 Karlsruhe (DE)
(72) Inventor: Kreysing, Moritz, Karlsruhe (DE); Ito, Shunsuke, Karlsruhe (DE); Wagner, Susan, Karlsruhe (DE)
(74) Representative: Müller-Boré & Partner Patentanwälte PartG mbB

(57) **Abstract**

In a method (10) of obtaining microscopy images (31, 32) containing 3D information, at least two microscopy images (31, 32) of a volumetric sample (20) are recorded. Both a recording depth and an intensity of illumination of the volumetric sample (20) are varied in a predetermined relation to each other during the recording of the at least two microscopy images (31, 32). The recording depth and/or the intensity are varied at two different predetermined relations to each other during the recording of a first and a second of the microscopy images (31, 32). 3D position information about the volumetric sample (20) is determined based on the first and second microscopy images (31, 32) and on the two different predetermined relations at which the recording depth and/or the intensity are varied differently during the recording of the first and second microscopy image (31, 32).

## Description

The invention relates to a method and system for obtaining microscopy images containing 3D information and a computer program product.

Traditional 3D fluorescence microscopy generates large datasets, usually in the GB (Gigabyte) to TB (Terabyte) range. A usual microscopy image may already have a size in the GB range. Especially when recording a video consisting of a plurality of such microscopy images and containing movement information, the video can have a size in the TB range. This creates challenges both in data storage and analysis of the data, often becoming a bottleneck.

In more detail, in classic 3D microscopy, the resolution along the z-axis containing 3D position information increases with the number of slides through a volumetric sample obtained, but with this number of slides also the amount of data increases. Therefore, the desired resolution should be balanced with a feasible amount of data. Furthermore, there is a lower limit to the resolution. The resolution should not be too small, as in 3D sectioning microscopy, such as spinning disc confocal or light sheet microscopy, the reduction of the number of slides along the z-axis bears the risk of missing objects completely, as they might be falling in between sections of slides along the z-axis.

The risk is especially prominent in high resolution microscopy, where objectives with a high numerical aperture (abbreviated as NA) are used. The thickness of each z-slide is determined by the infer NA squared and is therefore getting particularly thin with objectives with high NA. Hence, increasing the NA of the imaging system increases the potential z-resolution of the system, but the number of z-slides requires to increase quadratically with the NA of the system, resulting in particularly large datasets.

In view of the above, the problem relates to providing improved and/or efficient microscopy images containing 3D information of volumetric samples at high resolution.

This problem is solved by the subject-matter of the independent claims. Preferred embodiments are the subject-matter of the dependent claims.

An aspect relates to a method of obtaining microscopy images containing 3D information wherein at least two microscopy images of a volumetric sample are recorded. Therein, both a recording depth and an intensity of illumination of the sample are varied in a predetermined relation to each other during the recording of the at least two microscopy images. The recording depth and/or the intensity are varied at two different predetermined relations to each other during the recording of a first and a second of the microscopy images. 3D position information about the volumetric sample is determined based on the first and second microscopy images and on the two different predetermined relations at which the recording depth and/or the intensity are varied differently during the recording of the first and second microscopy image.

The method relates to microscopy imaging comprising 3D information. A plurality of microscopy systems to record such image data are known and may be used to record the microscopy images, e.g., a spinning disc microscopy and/or a light sheet microscopy and/or a wide field fluorescence microscopy and/or brightfield microscopy system.

To enable the determination of 3D information, merely the two microscopy images of the volumetric sample may be required. The two images may be recorded as 2D images and may already be enough to contain the 3D information.

In conventional systems, a lot more 2D images are required to obtain the required 3D information, because many 2D images are recorded in consecutive order at different focus depth and/or using illumination at only a specific depth so that a conventional 3D microscopy image consists of a plurality of single depth 2D images obtained in a "slice by slice" manner. These 2D images are often referred to as z-slides, because they record 2D images along a z-axis of the volumetric sample. The high number of single depth 2D images and/or z-slides is one reason why a conventional 3D microscopy image is so large and requires so much disc storage to handle.

In the method according to the invention, the first and second microscopy image, in particular being recorded as 2D images, are usually sufficient to obtain the full 3D information of the volumetric sample, even though in some use cases a couple more microscopy images may additionally be recorded for specific information surplus. Thus, the required storage data may be drastically reduced by requiring fewer 2D images (and accordingly less data), e.g., by the factor 100+ fewer 2D images, than in conventional microscopy imaging.

The volumetric sample of interest may, e.g., be provided as tissue, e.g., a human tissue for Diagnostics, as sample of human or animal cells, as egg or sperm, as a retinal structure, as a vasculature, as a 3D printed object, and/or as a crystallographic material. Indeed, the possible application during which the inventive microscopy imaging method may be used is rather widespread.

Contrary to conventional microscopy imaging wherein a plurality of images at different depths are recorded, at least two microscopy images are recorded at a rather long exposure time, e.g., at an exposure time from about 0.1 second to about 1 second. These two microscopy images may be recorded as 2D images. During this rather long exposure time of the microscopy images, both the recording depth and the intensity of illumination are varied. The recording depth may correspond to a z-position within the volumetric sample. Thereby, long exposure microscopy images are recorded in which points of the volumetric sample positioned at different recording depths are superimposed at different intensities. This kind of inventive imaging is also referred to herein as intensity-coded imaging, because points of the volumetric sample positioned at the same recording depth are illuminated with the same illumination intensity, and points of the volumetric sample positioned at different recording depths may be illuminated with different illumination intensities.

Therein, the recording depth may be varied monotonously, e.g., it may be continuously increased or decreased, e.g. following the z-axis of the volumetric sample, to scan through the volumetric sample during the recording of each microscopy image. During this variation of the recording depth, also the intensity of illumination is varied, so the illumination intensity varies along the recording depth. Generally, the recording depth may be associated and/or correspond to the z-axis value within the volumetric sample.

In the method, the illumination intensity may be varied as a function of the recording depth. In case a reversible function is chosen for this, each point comprising specific illumination in the recorded microscopy image can be associated to the specific recording depth it was recorded at. This helps extracting the 3D position information from the images.

Some or all of the microscopy images may be recorded consecutively, which may reduce intensity crosstalk during the recording. At least some or all of the microscopy images may be recorded at the same time, e.g., when the illumination is applied in different light channels.

Because both the recording depth and the illumination intensity are varied during the recording of the different microscopy images according to their predetermined relation, a specific illumination intensity can be associated to a specific recording depth.

In case the volumetric sample would only consist of objects reflecting the intensity in the exact same manner, e.g., because they would consist of the exact same material and they would have the same size, a single intensity coded microscopy image might even be enough to extract the 3D position information therefrom. However, in real life volumetric samples, objects have different sizes and may reflect their illumination differently. Therefore, two points in an intensity coded image may show the same intensity even though they were recorded at different recording depths. Thus, the 3D position information can usually not be extracted from only a single intensity-coded microscopy image.

However, in the first and the second recorded microscopy image, the different recording depths are illuminated differently. This different illumination may be achieved by varying the illumination intensity differently while scanning through the recording depth for the second image than when recording the first image. Herein, the recording depth may be varied exactly in the same manner when recording the two images, e.g., continuously along the z-axis to scan through the volumetric sample. However, in this case, the illumination intensity is varied differently during the two recordings. For example, during the recording of the first image, the intensity may be increased, and during the recording of the second image, it may be decreased. Thus, two intensity coded images are provided which are coded differently, i.e., in which the superimposed recordings depths are illuminated differently. Specific implementations may apply different variations of the illumination, e.g., a sinusoidal variation.

Alternatively, the same may be achieved by varying the illumination intensity exactly in the same manner for both recordings, but by varying the recording depth differently. For example, the scanning directions along the z-axis may be opposite to each other when recording the two images while applying the same illumination intensity variation, e.g., a continuous decrease of the illumination intensity.

The variation of the recording depth and of the illumination intensities may even be combined with each other, so that both may be different when recording the two different intensity-coded microscopy images of the same volumetric sample.

The first and second microscopy images may include recordings of the same and/or at least overlapping space within the volumetric sample, so they allow a comparison of the same points within the volumetric sample at different illuminations.

In many embodiments, it may reduce complexity and simplify the evaluation to always vary the recording depth in the same manner, e.g., to continuously scan through the volumetric sample, e.g., at a constant velocity. Herein, the variation of the recording depth is the same for recording both (or all) microscopy images. However, the variation of the illumination intensity is then different during the recording of the two (or all) images.

In any case, the recording depth and/or the intensity are varied at the two different predetermined relations to each other during the recording of the first and the second microscopy image. These two predetermined relations may be expressed by functions, e.g., by a function of the illumination intensity depending on the recording depth or vice versa. These functions may be referred to as variation functions, e.g., as first variation function for the variations for the recording of the first microscopy image and as second variation function for the variations for the recording of the second microscopy image. In case the two predetermined relations are expressed by such variation functions, the variation functions for recording the first and the second microscopy image differ from each other in that they assign different intensity values to the same recording depth (and/or z-) value within the volumetric sample (and/or vice versa).

The first and second microscopy image may be recorded as 2D images, e.g. as projection images with varying position in z-direction and intensity correlations. The illumination intensity may be correlated with the recording depth in each microscopy image.

These two images are usually sufficient to determine how objects within the volumetric sample react to illumination, e.g., which intensity they show under illumination. For this, it can be evaluated how the same points in both images are showing different illumination intensities in the two differently intensity-coded images. The different variation functions of the recording depth and/or the illumination intensity can be considered to extract an illumination sensitivity information about the volumetric sample. This illumination sensitivity information can then be used to extract the desired 3D position information out of the two images, considering again the variation of the recording depth and/or the illumination intensity during the recording of the first and second microscopy image.

E.g. by using deep learning algorithms and/or convenient variation functions, the 3D information may be extracted directly from the first and second microscopy images, e.g., without first extracting the illumination sensitivity information. The determined 3D information includes full 3D position information of a plurality of points within the volumetric sample, in particular of all recordable points and/or objects and/or beads within a recorded spatial section of the volumetric sample.

The method enables the determination of 3D position information about the volumetric sample based on the first and second microscopy images and on the two different predetermined relations at which the recording depth and/or the intensity are varied differently during the recording of the first and second microscopy image.

The extraction of the 3D position information for specific variation functions of the recording depth and the illumination intensity is described in more detail below for embodiments of the invention.

The method enables to capture and/or store and/or analyse the full 3D positional information of the volumetric sample using intensity-coded microscopy images in significantly reduced dataset sizes by a factor of approximately 3 to 1000-fold while maintaining acceptable z-resolution for various applications.

By recording the two intensity-coded images, one can restore accurate 3D positioning from just those two images instead of hundreds or thousands of images as in conventional 3D microscopy imaging. In addition to positional information, velocity fields can be inferred from the comparison of multiple images or sets of images over time. In the case of video imaging, the imaging requirement may be reduced even further, from two to approximately one image per frame.

The method may enable a higher data efficiency, in particular a higher information content per stored data volume, and/or a reduced data sized of 3D images. The method may enable faster acquisition speed, because less 2D microscopy images are recorded for the full 3D information. Furthermore, the method may enable a higher signal to noise ratio in low intensity imaging scenarios.

The method may reduce total photo exposure time by recording a reduced number of microscopy images, which may be advantageous for photosensitive volumetric samples.

The method may in particular enable recording fast time series, and/or fast sample previews, that are time and resource efficient over conventional microscopy imaging.

In an embodiment, the intensity for the recording of the first and the second microscopy image is varied as a predetermined function of the current recording depth. The well-defined function may be referred to as variation function. It enables a well-defined evaluation of the at least two microscopy images. Herein, the recording depth may be varied substantially monotonous and/or at a constant velocity through the volumetric sample, in particular in a constant velocity along the z-axis of the volumetric sample, for at least the first and second microscopy image, in particular for all recorded microscopy images. In such a scenario, the two different variations of the illumination intensities during the recording of the microscopy images can easily be compared with each other. This may enable a less complex evaluation of the recorded data and, thus, an improved determination of the 3D information.

In an embodiment, the determination of the 3D position information includes a subtraction and/or an addition and/or a division and/or a superposition of the first and second microscopy images. The mathematical operations of the microscopy images may generally be referred to as superpositions. The superposition of the two microscopy images may be weighted, in particular in dependency of the predetermined relations in that the recording depth and/or the illumination intensities are varied. Thereby, the intensities of the two microscopy images may be compared to each other. For example, after the first and the second microscopy images are recorded, a third and a fourth microscopy image may be determined based on superpositions of the first and second microscopy image. The third and fourth microscopy image may be determined based on different superpositions, for example an addition and/or a subtraction and/or a division of the two microscopy images. Then the third and fourth microscopy image each contain information of both microscopy images. This may be used to obtain additional information useful for evaluating the recorded data. For example, in case the variation functions for the recording of the first and the second microscopy image are complementary and/or inverse functions, an addition of the first and second microscopy image may generate an intensity map for reference purposes. Thus, the useful superpositions of the two microscopy images may be chosen depending on the variation functions when recording the two microscopy images, and/or more generally depending on the two different relations in which the recording depth and/or the intensity are varied for recording the two microscopy images. Thus, the superpositioning of the microscopy images enables extracting useful information for determining the 3D information about the volumetric sample. Herein and generally, superpositioning generally includes both subtraction and addition.

In an embodiment, a normalized intensity relation is determined based on the first and second microscopy images. A depth position of a point of the volumetric sample is represented by a function depending on the calculated normalized intensity relation of the first and second microscopy images. Examples of how to determine the normalized intensity relation and the 3D position of points of the volumetric samples are described below. The normalized intensity relation may, e.g., be a normalized intensity difference or a normalized intensity ratio. As already explained above, when using complementary and/or inverse variation functions for recording the two microscopy images, for example adding the two microscopy images enables the determination of an intensity map. Using this intensity map to normalize the relation (e.g. difference) between the two microscopy images may result in the normalized intensity relation. For more complex variation functions, more complex superpositions may be used accordingly to determine the normalized intensity relation throughout the recorded volumetric sample. The normalized intensity relation may be used to determine the 3D position information out of the first and/or second microscopy image.

In an embodiment, the recording depth is varied during the recording of the first and second microscopy image by scanning from a first side of the volumetric sample to a second side of the volumetric sample. Therein, the first side may be spaced in z-axis direction from the second side. The recording depth may be varied throughout the same spatial region of the volumetric sample during the recording of both the first and the second microscopy image. The variation of the recording depth may be varied substantially monotonous and/or continuous and/or at a constant velocity from the first side to the second side of the volumetric sample. This enables the recording of defined and/or substantially full and/or continuous spatial regions of the volumetric sample, i.e. a region from the first to the second side of it.

According to an embodiment, the recording depth is varied similar or identical during the recording of the first and second microscopy images, but the intensity is varied differently during the recording of the first and second microscopy images. This enables an easy comparison of the two microscopy images and/or the evaluation of rather simple variation functions, wherein the difference in intensity-coding substantially (e.g. directly and/or only) depends on the variation of the illumination intensity.

According to an embodiment, the variation of the intensity during the recording of the first microscopy image is complementary to the variation of the intensity during the recording of the second microscopy image. The intensity may be varied from a first start point to a first end point when recording the first microscopy image, and from a second start point to a second end point when recording the second microscopy image. Herein, the second start point may correspond to the first end point and the second end point may correspond to the first start point. From the respective start point to the respective end point, the variation may follow the negative derivative of the respective other variation. For example, the intensity could be varied according to f1(x)=x for the first microscopy image and according to f2(x)=1-x for the second first microscopy image, e.g., in the range x=[0;1]. Such different variations allow a reliable differentiation between the first and second microscopy image and, consequently, a reliable extraction of 3D information regarding the volumetric sample.

According to an embodiment, the intensity is increased linearly during the recording of the first microscopy image, and the intensity is decreased linearly during the recording of the second microscopy image. For example, the intensity of the light source may be changed monotonous with the z-position of the focal plane during a continuous exposure to generate complementary excitation intensity gradients along the optical axis. Generally, the optical axis may be arranged in the direction of the z-axis. This allows any easy comparison of the first and second microscopy image, because then simple evaluation methods like adding and/or subtracting these two images from each other already provides valuable 3D information regarding the volumetric sample.

In a development of this embodiment, a third microscopy image is produced by summing up the first and second microscopy images, and a fourth microscopy image is produced by subtracting the second from the first microscopy image. The summed-up third microscopy image may then constitute an intensity map of the recorded objects, while the subtracted fourth microscopy image may hold depth information like z-positional information and intensity information. Indeed, the first and second microscopy images together with the third and fourth microscopy images calculated therefrom are sufficient to provide the full 3D positional information of the volumetric sample.

In a further development of this embodiment, a normalized intensity relation is calculated by dividing the fourth microscopy image by the third microscopy image, and wherein a depth position of a point of the volumetric sample is represented by a function of the normalized intensity relation. As such, this normalised intensity relation can be understood as encoding the relation between the depth of points within the volumetric sample, in particular their z-position, and the recorded projection data, i.e., the recorded intensity data. This enables to readout the depth position of the points directly from the recorded datasets.

In an embodiment, a time series of microscopy images is recorded representing movement within the volumetric sample. Therein, the first and second microscopy images may be recorded for each point in the times series, i.e. for each frame, and they may be evaluated as described above (and in the following). Alternatively, the two predetermined relations in which the recording depth and/or the intensity are varied may alter between consecutive points in the time series, i.e. frames. Then, e.g., a first microscopy image is recorded at a first point in time with the first predetermined relationship, a second microscopy image is recorded at a second point in time with the second predetermined relationship, then a third microscopy image is recorded at a third point in time again with the first predetermined relationship, then a fourth microscopy image is recorded at a fourth point in time again with the second predetermined relationship and so on. The recording of the time series of microscopy images allows the acquisition of video data of the volumetric sample, which can be in particular valuable when recording active cells and/or tissue and/or movement within a fluid.

When recording a time series of the volumetric sample, at least one microscopy image may be recorded for each time frame. Therein, two consecutive microscopy images may be used as the first and second microscopy image to determine the 3D position information for a single frame. For example, when recording one microscopy image i at each frame *i*, the 3D position information for frame *i* may be determined based on microscopy image *i* (as the first microscopy image) and on microscopy image *i+1* (as the second microscopy image). Therein, consecutive microscopy images are recorded at different variations of the recording depth and/or the intensity, so they can be evaluated as described above. This means that for determining of the 3D position information for N frames, at least N+1 microscopy images should be recorded in the time series.

In an embodiment, the intensity is varied stronger in a specific area of the volumetric sample than in other areas of the volumetric sample. The specific area may, e.g., be provided as a dense area of the volumetric sample, and/or it may be provided as an area of interest of the volumetric sample. Such an area of interest may, e.g., be the neuro system of an embryo brain, or a cell nucleus of cell, or a stress point of a construction material. The specific area may get localized and/or recognized during a pre-scan of the volumetric sample. Then, a gradient of the variation function may be higher in the specific area(s) (e.g., densely packed areas) of the volumetric sample than in other areas of the volumetric sample. This allows a higher resolution and, thus, a higher detection sensitivity, within the specific areas. The application of such a variation function that factors in specific local areas and/or conditions within the volumetric sample may be done computer implemented and/or automatically, e.g., following initial recordings with a constant gradient of the variation function but that may not be precise enough to provide sufficient 3D information.

In an embodiment, a machine learning algorithm is used to determine the 3D positional information from the recorded microscopy images and/or to control the variation of the recording depth and/or of the intensity of illumination of the volumetric sample during the recording of the at least two microscopy images. Different machine learning algorithms may be used for these tasks. For example, one of the machine learning algorithms may analyse the recorded microscopy images to extract 3D positional information out of them. Another machine learning algorithms, or a subroutine of the first one, may control the applied variation functions for the recording depth and/or of the intensity of illumination. This later algorithm may alter the applied variation functions in response to initial measurements, e.g., to adapt them to actual conditions within the volumetric sample. The use of such machine learning algorithm(s) may help handling the data in a comfortable manner and/or increase the speed of analysation to extract the 3D information.

The method may improve axial positional precision in intensity-coded projection imaging. During the method, the intensity of light during image acquisition may be adjusted in order to surpass sampling limits and/or achieve higher resolution measurements of object positions within the volumetric sample.

Monotonic or periodic changes in intensity may be utilized to increase z-resolution beyond classical diffraction limits, thereby enhancing the overall quality and accuracy of reconstructed 3D positional data from recorded intensity-coded microscopy images.

The volumetric sample may be reconstructed as a 3D sample from the recorded microscopy images via traditional segmentation methods and/or via machine learning approaches.

In an embodiment, the intensity of the light source is changed with the z-position during a continuous exposure to generate complementary excitation intensity gradients or patterns, e.g., sinusoidal modulations, i.e. Sin(z), Cos(z), Sin(2z), Cos(2z), etc., along the optical axis in order to generate implicit or explicit 3D datasets or models of the volumetric sample. The gradients may be described by (e.g., complementary) variation functions.

When using more than two microscopy images for each point in time, e.g., at least three or more microscopy images, the precision of the 3D position information may be increased and/or an ambiguity may be reduced.

For example, in an embodiment, at least three microscopy images are recorded at at least three different sinusoidal intensity variations. Therein, a predetermined frequency shift and/or predetermined phase shift is applied to obtain the three different sinusoidal intensity variations. This enables increasing the precision of the 3D position information and/or reducing its ambiguity, because the 3D position information may be determined based on more data, namely on the at least three different microscopy images. The predetermined frequency and/or phase shifts between the sinusoidal intensity variations allow for a mathematically precise determination of the (e.g. normalized) intensity relation between the at least three microscopy images. Thus, these mathematically controlled intensity variations may improve the determination of the 3D positional information.

In an embodiment, the recording of the microscopy images is repeated together with the determination of the 3D positional information of objects within the volumetric sample, in particular tracer objects, over time to infer flows in liquids or gasses.

In an embodiment, the two microscopy images of the volumetric sample are recorded in two separable and/or non-overlapping light channels, in particular at the same time. For example, the two microscopy images may be recorded at separable fluorescent channels without strong crosstalk, e.g., at light channels with an excitation with light of a wavelength of 405nm and of 630nm as common laser wavelengths. Even without fluorescent excitation, the illumination intensity may be provided at two different wavelengths. Light scattering may be used to separate the different illumination intensities for the recording of the two microscopy images. For the two light channels, spectral de-mixing may be applied. Herein, the two microscopy images may even be recorded at the same time, which allows improving the precision, in particular when recording a time series of microscopy images and/or a volumetric sample with moving elements.

An aspect relates to a system for obtaining microscopy images containing 3D information with an imaging device for recording at least two microscopy images of a volumetric sample with a controllable recording depth. An illumination device is configured to illuminate the volumetric sample at a controllable intensity. A variation module varies both the recording depth and the intensity of illumination of the sample in a predetermined relation to each other during the recording of the at least two microscopy images, wherein the variation module is configured to vary the recording and/or the intensity at two different predetermined relations to each other during the recording of a first and a second of the microscopy images. A determination module determines 3D position information about the volumetric sample based on the first and second microscopy images and on the two different predetermined relations at which the recording depth and/or the intensity are varied differently during the recording of the first and second microscopy image.

The system may be configured to execute and/or control the method described above at least partially. Therefore, the description of the method also applies to the system and vice versa. The modules of the system may be computer implemented an/or Software controlled, in particular the variation module and/or the determination module. The system may also comprise a deep learning algorithm controlling one or more of the modules.

An imaging device may be used to record the microscopy images that uses a camera chip for capturing the microscopy images. For example, the imaging device may be implemented as a spinning disc microscope capable of recording multiple intensity-coded projection images with varying position and intensity correlations.

Alternatively, the imaging device may be implemented as a light sheet microscope capable of capturing high-resolution, low phototoxicity intensity-coded projection images, and/or as a wide field microscopy device, in particular wide field fluorescence microscopy coded image projections are obtained, and/or as a brightfield microscopy device obtaining brightfield images.

The system comprising an adjustable light source as the illumination device that changes its intensity proportionally with the change in z-position during image acquisition, thereby generating, e.g., complementary excitation intensity gradients along the optical axis.

In an embodiment, the system comprises a spinning disc microscope and/or a light sheet microscope and/or a wide field fluorescence microscope and/or brightfield microscope. It may be used to record the microscopy images in a controlled manner, wherein the recording depth and/or the intensity of the illumination may be varied in a controlled and/or predetermined manner, in particular according to the two predetermined relations.

An aspect relates to a computer program product comprising computer-readable instructions, which, when loaded and executed on a computer system, cause the computer system to perform operations according to the method above, including controlling the variation of the recording depth and/or the intensity at two different predetermined relations during the recording of a first and a second of the microscopy images and/or determining the 3D position information about the volumetric sample based on the first and second microscopy images and on the two different predetermined relations at which the recording depth and/or the intensity are varied differently during the recording of the first and second microscopy image.

The computer program product may be implemented as a Software module, in particular as a pure Software module, and/or it can comprise Hardware.

The system and/or the method may be controlled to combine a plurality of intensity-coded microscopy images to explicitly or implicitly reconstruct 3D volumes.

The system and/or the method may combine one or more intensity-coded microscopy images to directly feed these images into data analysis pipelines, such as machine learning classifiers.

The method may even be applied for PIV imaging, i.e. in Particle Image Velocimetry. PIV is an optical method of flow visualization, e.g., used in education and research. It may be used to obtain instantaneous velocity measurements and related properties in fluids. In PIV, the method may even be applied to non-microscopic optical images. Therefore, here is also disclosed a method of obtaining optical images containing 3D information wherein at least two optical images of a volumetric sample are recorded. Therein, both a recording depth and an intensity of illumination of the sample are varied in a predetermined relation to each other during the recording of the at least two optical images. The recording depth and/or the intensity are varied at two different predetermined relations to each other during the recording of a first and a second of the optical images. 3D position information about the volumetric sample is determined based on the first and second optical images and on the two different predetermined relations at which the recording depth and/or the intensity are varied differently during the recording of the first and second optical image.

This method relates to optical imaging as in PIV imaging comprising 3D information. Herein, the optical imaging may be achieved with an optical camera that may (e.g. controllably) adjust its recording depth during the recording of the two optical images. The variation of the recording depth and/or the illumination intensity may occur exactly as described above and in the following. Thus, the description of the method of obtaining microscopy images also applies to the method of obtaining optical images with the difference that not microscopy images are recorded and used to determine the 3D position information, but optical images, e.g., recorded with a regular camera lens and/or a photographic camera lens.

Accordingly, also a system for obtaining optical camera images containing 3D information is disclosed herein, and a computer program product comprising computer-readable instructions, which, when loaded and executed on a computer system, cause the computer system to perform operations according to the method of obtaining optical images.

Herein, the term three-dimensional is often referred to as 3D.

The numbers and/or angles given in the claims and the description are not limited to the exact numbers and/or angles, but may include measurement inaccuracies within limits that still enable solving the underlying problem.

The invention is further illustrated in reference to embodiments shown in the figures. Embodiments of the invention are described with reference to the figures. Features of the embodiments shown in the figures may be combined with alternative embodiments. Identical reference numbers may identify identical or similar features of the embodiments. The figures show:
- Fig. 1: in a schematic diagram an embodiment of a method of obtaining microscopy images containing 3D information;
- Fig. 2: a schematic presentation of an embodiment of obtaining microscopy images containing 3D information in comparison to a conventional method;
- Fig. 3: a graphical presentation of a normalized intensity relation determined by an embodiment for a semi-synthetic dataset;
- Fig. 4: a graphical presentation of an experimentally measured normalized intensity relation determined by an embodiment;
- Fig. 5: schematically two microscopy images recorded by an embodiment of a method of obtaining microscopy images containing 3D information; and
- Fig. 6: schematically 3D position information of a volumetric sample determined from the two microscopy images shown in Fig. 5.

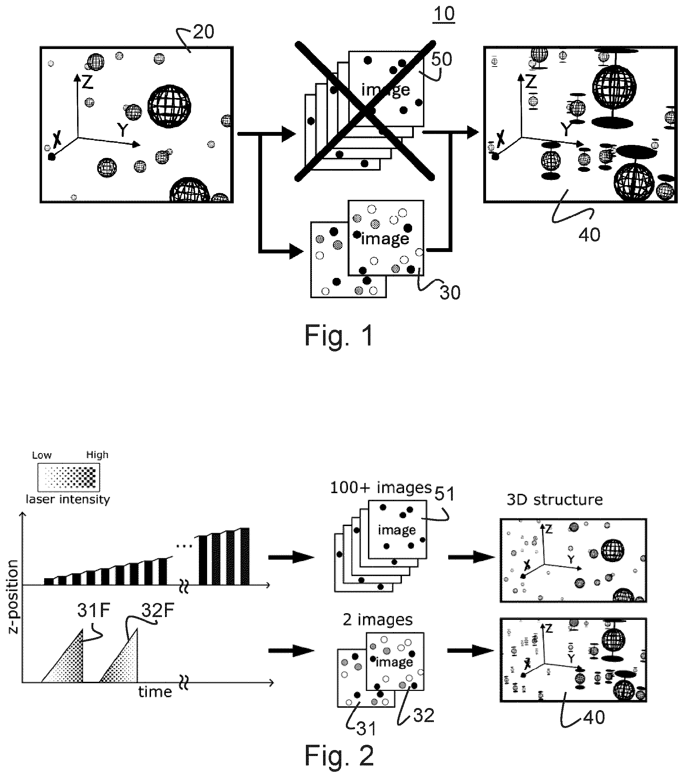

**Fig. 1** shows in a schematic diagram an embodiment of a method 10 of obtaining microscopy images containing 3D information of a volumetric sample. Initially, a volumetric sample 20 is provided. In conventional methods, hundreds of microscopy images are recorded showing slides through the volumetric sample 20. This conventional step 50 of a conventional method not executed during the actual method 10 and is shown for comparison only. Instead, at least two microscopy images are recorded in recording step 30. These two microscopy images are recording during a long-time exposure and contain image data of a region of interest of the volumetric sample 20, respectively. In particular, both images may contain image data of the whole region of interest of the volumetric sample 20, respectively.

In a determination step, volumetric 3D information 40 is determined from the two images recorded in step 30. The volumetric 3D information 40 is shown schematically in Fig. 1 with error bars in z-direction. The volumetric 3D information 40 can be determined in a computer implemented method. The volumetric 3D information contains 3D position information about the volumetric sample 20. It may include full 3D coordinates of points and/or objects and/or beads within the volumetric sample 20.

**Fig. 2** shows a schematic presentation of an embodiment of obtaining the two microscopy images containing 3D information in comparison to a conventional method. The upper line of Fig. 2 shows how in conventional 3D microscopy, hundreds of conventional microscopy images 51 are recorded, wherein each microscopy image 51 contains information about a specific z-slide of the volumetric sample 20, i.e., the objects arranged at a specific z-position within the volumetric sample 20. These conventional microscopy images 51 are obtained, e.g., by illumination only a specific z-distance of the volumetric sample 20 and recording it. Alternatively or additionally, a specific focus depth may be chosen for a specific z-distance for each conventional microscopy image 51 as recorded during step 50 (not implemented in the embodiment of the invention).

In the method according to the invention, a first microscopy image 31 and a second microscopy image 32 are recorded during the recording step 30. During the recording of the first microscopy image 31, the illumination intensity is continuously increased together with the recording depth in z-direction. This variation of the illumination intensity and the recording depth during the recording of the first microscopy image 31 is shown schematically as first variation function and/or a first variation relation 31F in Fig. 2.

During the recording of the second microscopy image 32, the illumination intensity is continuously decreased together with the increase of the recording depth in z-direction. This variation of the illumination intensity and the recording depth during the recording of the second microscopy image 32 is shown schematically as second variation function and/or a second variation relation 32F in Fig. 2.

The increase and/or decrease of the illumination intensity in variation functions 31F, 32F may be applied to linear and/or monotonous. In other embodiments, more complex variation functions 31F, 32F may be applied, e.g., sinusoidal and/or polynomial functions.

The two microscopy images 31 and 32 may be recorded by spinning disc microscopy with long exposure times, wherein two z-projections are recorded while manipulating laser intensity level to change gradually and/or linearly with z-positions.

In this embodiment, the recording depth is varied from one side of the volumetric sample 20 at first z-position to another side of the volumetric sample at a second z-position. It is varied exactly the same during the recording of the first and second microscopy image 31 and 32, e.g. from a smaller first z-position to a larger second z-position during each recording.

However, the illumination intensity is varied differently during the recording of the first and second microscopy image 31 and 32: The decrease and increase during the recording of the respective microscopy images 31 and 32 provided the two microscopy images 31 and 32 with a different intensity-coding.

As shown on the middle of the lowest line in Fig. 2, points that are illuminated with great intensity in the first microscopy image 31 are illuminated with low intensity in the second microscopy image 32 and vice versa.

In a post-processing step, a positional information, including the z-position, can be reconstructed from those two intensity-coded microscopy images 31 and 32. This is shown as volumetric 3D information 40 to the right of Fig. 2.

The reconstruction of 3D positions of recorded objects and/or points and/or beads from the two microscopy images 31 and 32 may be done as described in the following. The first microscopy image 31 is recorded as *I*_{A} with a linear increase of intensity with penetration depth into the volumetric sample 20. The complementary image, the second microscopy image 32, is recorded as *I*_{B} with a proportional linear decrease of intensity with penetration depth.

From those two intensity-coded images, two more images are calculated. A third microscopy image is calculated by summing up the two intensity-coded microscopy images 31 and 32, resulting in the third image *I*_{A}+*I*_{B}. A fourth microscopy image is calculated by subtracting them, resulting in the fourth image *I*_{A}*-I*_{B}*.*

The summed-up third image constitutes an intensity map of the recorded objects, while the subtracted fourth image holds z-positional (and/or depth) information and intensity information. From these additional third and fourth images, the subtracted fourth image may be normalized by the summed-up third image. This normalized intensity relation yields signals that are proportional to the z-position of the objects/points within the images, independent of the intensity of the objects/points. The normalized intensity relation may, in this case, be a normalized intensity difference. It may be calculated as follows: $normalized intensity relation = \frac{{I}_{A} - {I}_{B}}{{I}_{A} + {I}_{B}}$

As such, the normalised intensity relation calculated from the third and fourth image can be understood as encoding the relation between z-position of objects within the volumetric sample 20 and the recorded projection data. It allows to readout the z position directly from the recorded datasets with the following equation: $Z = \frac{{z}_{range}}{2} ⋅ \left(\frac{{I}_{A} - {I}_{B}}{{I}_{A} + {I}_{B}}+1\right)$

Therein, *z_{range}* refers to the z-range recorded in the first and second microscopy images 31 and 32.

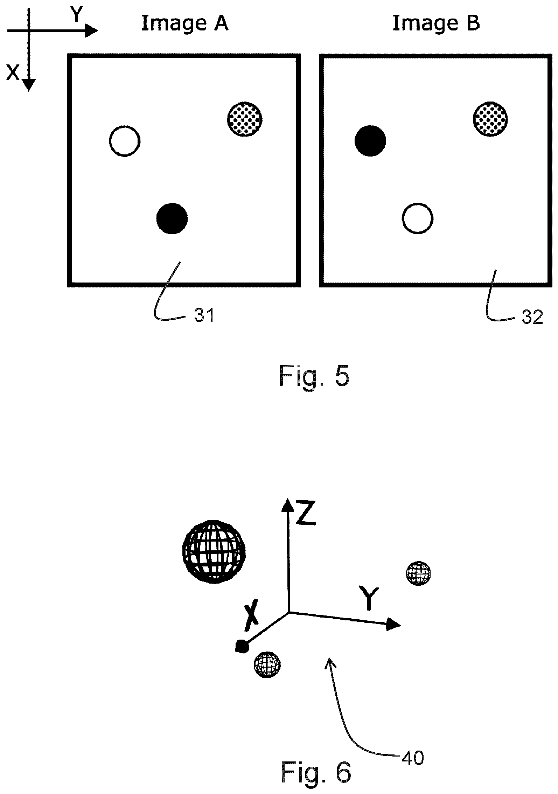

**Fig. 5** schematically shows two microscopy images 31 and 32 recorded by an embodiment of a method of obtaining microscopy images containing 3D information. During the recording, the same variation functions 31F and 32F are described in reference to Fig. 2. However, for the sake explanation, a less complex volumetric sample is used that comprises merely three objects. An object 1 within the volumetric sample is illuminated with a high intensity in the first microscopy image 31, and with a low intensity in the second microscopy image 32. An object 2 within the volumetric sample is illuminated with a low intensity in the first microscopy image 31, and with a high intensity in the second microscopy image 32. A third object is illuminated with a medium intensity in both microscopy images 31 and 32.

**Fig. 6** shows in a schematic presentation how the volumetric 3D position information 40 of the volumetric sample 20 is determined from only the two microscopy images 31 and 32 shown in Fig. 5. Therein, the normalized intensity relation based on the calculated third and fourth microscopy image may be used, exactly as described above.

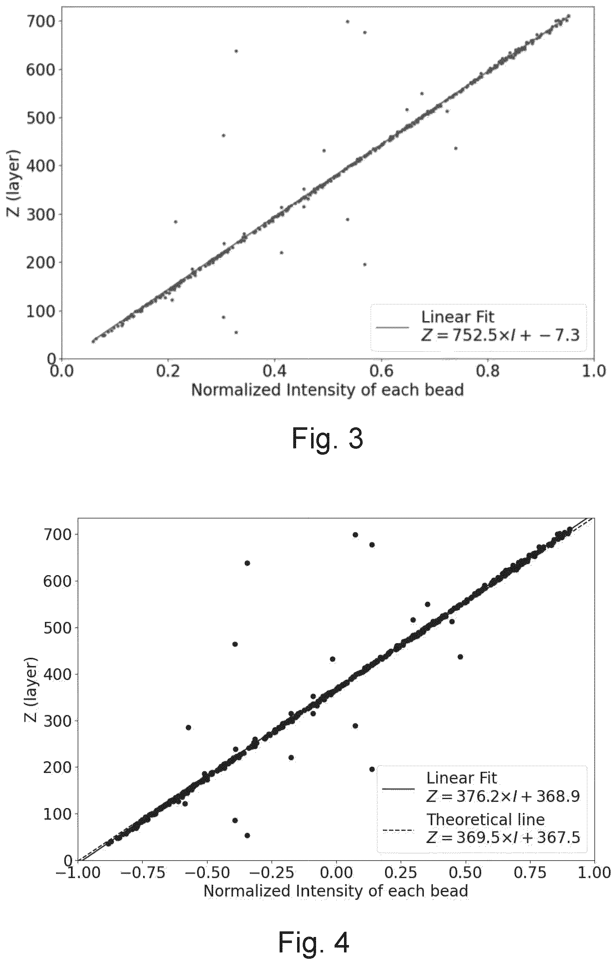

**Fig. 3** shows a graphical presentation of a normalized intensity relation determined by an embodiment for a semi-synthetic dataset. The normalized intensity relation is calculated by the above method, based on the first and second microscopy images 31 and 32 recorded with the variation functions as described in reference to Fig. 2 and the third and fourth image calculated therefrom.

As shown in Fig. 3, the normalized intensity relation of each object and/or point and/or bead within the recorded volumetric sample 20 is arranged almost exceptionally on the expected diagonal.

**Fig. 4** shows a graphical presentation of an experimentally measured normalized intensity relation determined by an embodiment. Again, the normalized intensity relation is calculated by the above method, based on the first and second microscopy images 31 and 32 recorded with the variation functions as described in reference to Fig. 2 and the third and fourth image calculated therefrom.

As shown in Fig. 4, the linear fit of the calculated normalized intensity relation nearly follows the theoretically calculated normalized intensity relation.

In order to improve the precision of the 3D position information and/or to decrease the size of the error, more than just the first and second microscopy images may be recorded with further differing intensity-coding, and the normalized intensity relation can be calculate based on all of the recorded microscopy images.

Should in an actual experiment the relation between the differential intensity in the intensity-coded microscopy images and the z-position slightly deviate from experimental prediction, adapted models, including machine learning models, and/or an experimental calibration can establish this relationship.

As a result, for volumetric samples 20 in which objects are relatively sparsely distributed, or in which the information of interest is sparse in other representations, this method may be directly applied. Where object spacing is not sufficiently large to avoid the merge of objects in projection, differently weighted first and second microscopy images can be used to disentangle these objects, via linear algebra routines and/or machine learning approaches. This means that a different first and/or second variation function 31F, 32F may be used when recording the microscopy images, e.g. different intensity modulations.

The method enables rapid and accurate determination of object positions within large volumetric samples in microscopy, streamlining the process for researchers and professionals across various industries.

### Applications

By greatly enhancing the efficiency of 3D information capture, this technology is applicable in numerous fields where efficient 3D positioning is essential, including biology, materials science, engineering, and medical research. Further, this technology may support significant advancements in research and development across multiple disciplines, including applications in machine learning and artificial intelligence-based image analysis.

Research applications are, e.g.:
i) spinning disc microscopy. E.g., to locate objects of interest in 3D.
ii) Light sheet microscopy.
iii) Scape microscopy (light sheet through the lens).
iv) Wide field fluorescence microscopy, particularly in combination with AI deconvolution strategies.
v) Macro-photography including application for dynamic tracking of objects in 3D.
vi) Particle 3D image velocimetry (tracking tracer particles to determine 3D flows within liquids or gases).
vii) Dark field microscopy.
viii) Compressed imaging with 3D information for AI processing, e.g. processing by neural networks, including convolutional neural networks, and transformer architectures, e.g., for fast classification applications.
ix) low intensity / photo-exposure imaging, since read-out noise is reduced.

Potential Medical Applications are, e.g.:
i) High-Throughput Cancer Diagnostics
   - Application: Rapid analysis of tissue biopsies.
   - Impact: Accelerates diagnosis and enables personalized medicine.
   - Imaging: High-speed coded 2D images are captured sequentially across focal planes, reconstructed into 3D volumes.
ii) Neurodegenerative Disease Monitoring
   - Application: Tracking disease progression in brain tissues.
   - Impact: Essential for developing and monitoring new therapeutics.
   - Imaging: Coded 2D images acquired at multiple depths create detailed 3D
   - models of neural structures.
iii) Organ-on-a-Chip Analysis
   - Application: Real-time monitoring of cellular behaviours and drug responses.
   - Impact: Enhances drug testing efficiency, reducing animal model reliance.
   - Imaging: Coded 2D optical images recorded over time are reconstructed into dynamic 3D volumes.
iv) Advanced Fertility Treatments
   - Application: Analysis of egg, sperm, and embryo viability.
   - Impact: Improves IVF success rates by identifying viable candidates.
   - Imaging: Coded 2D images are imaged rapidly to assess morphological and motility features in 3D.
v) Infection and Immune Response Monitoring
   - Application: Tracking immune cells' responses to infections.
   - Impact: Critical for vaccine and immunotherapy development.
   - Imaging: Coded 2D images capture immune cell behaviour within a 3D environment.
vi) Ophthalmologic Diagnosis
   - Application: Imaging of retinal structures and vasculature.
   - Impact: Early detection and management of eye diseases.
   - Imaging: Coded 2D images compiled to form a comprehensive 3D view of the retina.
vii) Cardiovascular Disease Research
   - Application: Studying heart tissue structure and function.
   - Impact: Informs new treatments for heart diseases.
   - Imaging: High-resolution 2D images taken at incremental depths visualize the heart in 3D.
viii) Tumour Environment Studies
   - Application: Observing cancer cell interactions with their microenvironment.
   - Impact: Understanding metastasis and developing targeted therapies.
   - Imaging: Coded 2D images across the tumour volume reconstructed into a 3D structure.

Materials and Bioengineering Applications are, e.g.:
i) Additive Manufacturing (3D Printing) Quality Control
   - Application: Inspecting internal structures for defects.
   - Impact: Ensures quality in polymer-based parts.
   - Imaging: Coded 2D imaging builds a full 3D volume to identify voids and defects.
ii) Semiconductor Defect Detection
   - Application: Locating particulate contaminants on semiconductor wafers.
   - Impact: Prevents defects in semiconductor manufacturing.
   - Imaging: High-resolution coded 2D images at different depths reveal precise locations of contaminants in 3D.
iii) Crystallographic Defects in Materials
   - Application: Studying defects like dislocations and vacancies in materials.
   - Impact: Optimizes material properties and quality, especially in diamonds.
   - Imaging: Coded 2D images form a 3D map to localize and analyse crystallographic defects.
iv) Nanomedicine Development
   - Application: Visualizing the distribution and effectiveness of nanomedicines.
   - Impact: Enhances targeted drug delivery system development.
   - Imaging: Coded 2D imaging captures nanoparticle distribution within biological tissues in 3D.
v) Regenerative Medicine
   - Application: Monitoring stem cells and bioengineered tissues integration.
   - Impact: Crucial for successful tissue engineering and regenerative therapies.
   - Imaging: Coded 2D images are acquired and assembled into 3D images to observe tissue regeneration over time.

### List of Reference Numerals

- 1: object in a volumetric sample
- 2: object in a volumetric sample
- 10: method
- 20: volumetric sample
- 30: recording step
- 31: first microscopy image
- 31F: first variation function
- 32: second microscopy image
- 32F: second variation function
- 40: volumetric 3D positional information
- 50: conventional image recording
- 51: conventional microscopy image

## Claims

1. Method (10) of obtaining microscopy images (31, 32) containing 3D information wherein:
- at least two microscopy images (31, 32) of a volumetric sample (20) are recorded;
- both a recording depth and an intensity of illumination of the volumetric sample (20) are varied in a predetermined relation to each other during the recording of the at least two microscopy images (31, 32);
- the recording depth and/or the intensity are varied at two different predetermined relations to each other during the recording of a first and a second of the microscopy images (31, 32);
- 3D position information about the volumetric sample (20) is determined based on the first and second microscopy images (31, 32) and on the two different predetermined relations at which the recording depth and/or the intensity are varied differently during the recording of the first and second microscopy image (31, 32).

2. Method according to claim 1, wherein the intensity for the recording of the first and the second microscopy image (31, 32) is varied as a predetermined function of the current recording depth.

3. Method according to claim 1 or 2, wherein the determination of the 3D position information includes a subtraction and/or an addition and/or a division and/or a superposition of the first and second microscopy images (31, 32).

4. Method according to any preceding claim, wherein a normalized intensity relation is determined based on the first and second microscopy images (31, 32); and wherein a depth position of a point of the volumetric sample (20) is represented by a function depending on the calculated normalized intensity relation of the first and second microscopy images (31, 32).

5. Method according to any of the preceding claims, wherein the recording depth is varied during the recording of the first and second microscopy image (31, 32) by scanning from a first side of the volumetric sample (20) to a second side of the volumetric sample.

6. Method according to any preceding claim, wherein the variation of the intensity during the recording of the first microscopy image (31) is complementary to the variation of the intensity during the recording of the second microscopy image (32).

7. Method according to any preceding claim, wherein the intensity is increased linearly during the recording of the first microscopy image (31), and the intensity is decreased linearly during the recording of the second microscopy image (32).

8. Method according to claims 6 and 7, wherein a third microscopy image is produced by summing up the first and second microscopy images (31, 32), and a fourth microscopy image is produced by subtracting the second from the first microscopy image (31, 32).

9. Method according to claim 8, wherein a normalized intensity relation is calculated by dividing the fourth microscopy image by the third microscopy image, and wherein a depth position of a point of the volumetric sample (20) is represented by a function of the normalized intensity relation.

10. Method according to any preceding claim, wherein a time series of microscopy images (31, 32) is recorded representing movement within the volumetric sample (20).

11. Method according to any preceding claim, wherein the intensity is varied stronger in a specific area of the volumetric sample than in other areas of the volumetric sample (20).

12. Method according to any preceding claim, wherein a machine learning algorithm is used:
- to determine the 3D positional information from the recorded microscopy images (31, 32); and/or
- to control the variation of the recording depth and/or of the intensity of illumination of the volumetric sample (20) during the recording of the at least two microscopy images (31, 32).

13. Method according to any preceding claim, wherein the two microscopy images (31, 32) of the volumetric sample (20) are recorded in two separable and/or non-overlapping light channels, in particular at the same time.

14. System for obtaining microscopy images containing 3D information, comprising:
- an imaging device for recording at least two microscopy images (31, 32) of a volumetric sample (20) with a controllable recording depth, in particular a spinning disc microscope and/or a light sheet microscope and/or a wide field fluorescence microscope and/or brightfield microscope;
- an illumination device for illuminating the volumetric sample (20) at a controllable intensity;
- a variation module that varies both the recording depth and the intensity of illumination of the volumetric sample (20) in a predetermined relation to each other during the recording of the at least two microscopy images (31, 32), wherein the variation module is configured to vary the recording and/or the intensity at two different predetermined relations to each other during the recording of a first and a second of the microscopy images (31, 32);
- a determination module that determines 3D position information about the volumetric sample (20) based on the first and second microscopy images (31, 32) and on the two different predetermined relations at which the recording depth and/or the intensity are varied differently during the recording of the first and second microscopy image (31, 32).

15. A computer program product comprising computer-readable instructions, which, when loaded and executed on a computer system, cause the computer system to perform operations according to the method according to any claims 1 to 12, including controlling the variation of the recording depth and/or the intensity at two different predetermined relations during the recording of a first and a second of the microscopy images (31, 32) and/or determining the 3D position information about the volumetric sample (20) based on the first and second microscopy images (31, 32) and on the two different predetermined relations at which the recording depth and/or the intensity are varied differently during the recording of the first and second microscopy image (31, 32).
